# Europäisches Patentamt

# European Patent Office

# Office européen des brevets

(19)

(11) Numéro de publication: **0 115 231**
**B1**

(12) **FASCICULE DE BREVET EUROPÉEN**

(45) Date de publication du fascicule du brevet:
08.04.87

(51) Int. Cl.⁴: **G 21 C 17/06**, G 01 N 29/04

(21) Numéro de dépôt: **83402469.7**

(22) Date de dépôt: **19.12.83**

(54) Procédé et dispositif de détection d'éléments combustibles défectueux.

(30) Priorité: **17.12.82 FR 8221243**

(43) Date de publication de la demande:
**08.08.84 Bulletin 84/32**

(45) Mention de la délivrance du brevet:
**08.04.87 Bulletin 87/15**

(84) Etats contractants désignés:
**BE CH DE GB IT LI SE**

(56) Documents cité:
**EP-A-0 018 290**
**FR-A-2 249 331**
**FR-A-2 358 658**
**FR-A-2 400 201**
**FR-A-2 429 430**
**FR-A-2 493 025**

(73) Titulaire: **Société en nom collectif FRAMATOME et COGEMA dite "FRAGEMA", Tour Fiat 1, Place de la Coupole, F-92084 Courbevoie (FR)**

(72) Inventeur: **Gravelle, Alain, 39, rue Amédé Usseglio, F-92350 Plessis Robinson (FR)**

(74) Mandataire: **Fort, Jacques, CABINET PLASSERAUD 84, rue d'Amsterdam, F-75009 Paris (FR)**

LIBER, STOCKHOLM 1987

## Description

La présente invention concerne le domaine de la détection des éléments de combustible défectueux dans un assemblage immergé, les éléments étant constitués par une gaine tubulaire métallique fermée par des bouchons étanches, contenant un empilement de pastilles de combustible nucléaire baignant dans une atmosphère de gaz sous pression. Une application particulièrement importante de l'invention est constituée par la détection et l'identification d'éléments combustibles défectueux dans un assemblage pour réacteur nucléaire, ayant une longueur de plusieurs mètres, contenant un empilement de pastilles de combustible retenues en contact par un ressort comprimé entre l'empilement et un bouchon terminal et placé dans une chambre d'expansion occupée par le gaz sous pression.

Il existe déjà des procédés largement utilisés permettant de détecter ceux des assemblages qui, après irradiation, présentent des crayons défectueux, dont la gaine a perdu son étanchéité. La solution la plus courante consiste à placer les assemblages extraits d'un réacteur nucléaire, après irradiation, dans une cellule où on les chauffe, de sorte que la pression des gaz de fission contenus dans les crayons combustibles augmente et que ces gaz s'échappent dans la cellule par les fissures des crayons défectueux. Mais cette technique ne permet pas d'identifier les crayons défectueux à remplacer.

On a déjà proposé par ailleurs d'appliquer les techniques connues de sondage non destructif par ultrasons au contrôle des éléments de combustible, avant mise en place dans les assemblages, et à la détection de crayons défectueux, après irradiation. Beaucoup de ces procédés ne sont applicables que sur un crayon isolé et non immergé, ce qui constitue une limitation extrêmement gênante. Parmi ces procédés, on peut citer le chauffage de la chambre d'expansion suivi de la détection par ultrasons de l'eau condensée sur le bouchon (FR-A-2 222 732 et FR-A-2 365 185) et la mesure de l'atténuation, provoquée par l'eau éventuellement contenue dans le crayon, d'une onde ultrasonore se propageant dans la gaine (FR-A- 2 287 753 et FR-A-2 341 182). On peut vraisemblablement attribuer cette orientation de la technique antérieure au fait qu'on a cherché à soustraire la mesure à l'influeence du milieu ambiant. Toutefois, on a également proposé des procédés de détection des éléments de combustible défectueux alors que ces derniers sont immergés. Mais les procédés proposés jusqu'ici ne visaient qu'à rechercher l'un des indices de défaut, et en particulier la présence d'eau dans la gaine. Par exemple, on a proposé de détecter la présence d'eau liquide à la base de chaque crayon, au niveau d'une chambre d'expansion, en dirigeant un faisceau ultrasonore transversalement au crayon (FR-A-2 341 183). Une méthode plus intéressante (FR-A-2 493 025), conforme au préambule de la revendication 1 consiste à détecter l'énergie ultrasonore diffusée dans la masse liquide par un défaut présent dans un crayon dans lequel se propagent des ondes ultrasonores.

La présente invention vise à fournir un procédé et un dispositif de détection d'éléments de combustible défectueux répondant mieux que ceux antérieurement connus aux exigences de la pratique, notamment en ce qu'ils sont sensibles aux divers indices de défaut, et en particulier tout à la fois à l'entrée d'eau dans la gaine et à la présence de fissures ou de défectuosités de celle-ci. L'invention a impliqué plusieurs constatations qui n'étaient nullement évidentes pour l'homme du métier. La première est que des ondes ultrasonores à une fréquence telle qu'elles se propagent en mode de plaque ou mode de Lamb, déjà suggérée pour le contrôle d'éléments de combustible neufs à sec (EP-A-0 018 290), sont peu atténuées par un liquide baignant la surface extérieure de la gaine. Une seconde constatation, également importante, est que la présence simultanée de pastilles de combustible et d'un film d'eau qui les entoure dans la gaine provoque une atténuation très importante des ondes de Lamb en mode $S_0$ alors qu'on savait qu'il n'y avait guère d'atténuation dans la gaine démunie de combustible, mais contenant de l'eau, même en quantité importante.

A partir de ces constatations, l'invention propose notamment un procédé de détection d'éléments de combustible défectueux dans un assemblage plongé dans un liquide, utilisant l'absorption ultrasonore suivant la revendication 1.

On sait que, pour provoquer une propagation en mode de Lamb dans une gaine, il faut que les ultrasons soient appliqués sous forme de train, avec une fréquence telle que la longueur d'onde soit égale ou inférieure à l'épaisseur de la gaine. On peut donc aisément déterminer la limite supérieure de fréquence acceptable. Dans le domaine ainsi délimité, on est amené ensuite à choisir une plage de fréquences qui correspond à un maximum d'absorption en cas de présence d'un film d'eau entre les pastilles et la gaine et une seconde plage pour correspondre à la détection des défauts mécaniques de la gaine. Dans la pratique, on utilisera, pour la détection de présence de liquide, une première plage de fréquences $f_1$ inférieure à la plage de fréquences $f_2$ pour la détection des défauts mécaniques. Ces plages $f_1$ et $f_2$ correspondront en règle générale à une fréquence inférieure au megahertz c'est-à-dire notablement inférieure aux fréquences couramment utilisées en contrôle par ultrasons de pièces métalliques.

En effectuant ultérieurement une analyse des échos de retour de trains d'ondes ultrasonores appliqués au ressort par l'intermédiaire du bouchon, trains de fréquence et de durée telles qu'il y ait propagation en mode de Lamb du type $A_0$ ou $A_1$ dans le ressort, on obtient une indication sur la pression de gaz qui règne dans la chambre d'expansion et baigne le ressort. La plage de fréquences correspondant à cette dernière détermination sera généralement nettement inférieure à $f_1$ et $f_2$.

Il est avantageux d'effectuer la vérification d'un crayon en une seule séquence d'opérations, par application à un traducteur unique, couplé à un bouchon terminal ou à la gaine, utilisé en émetteur et en capteur, de trains d'ondes dont on fait progressivement varier la fréquence de façon à balayer les plages $f_1$, $f_2$ et $f_3$. Dans chacune des plages présélectionnées, on peut, soit mesurer la valeur maximale des échos, soit, mieux, effectuer une moyenne des échos sur l'étendue de la plage présélectionnée. Par échantillonnage et numérisation, on peut également disposer de l'ensemble des données d'essais et y appliquer tout traitement mathématique destiné à faire ressortir l'information utile et à réduire le bruit de fond.

L'invention propose également un dispositif de détection d'éléments de combustible défectueux dans un assemblage de combustible nucléaire conforme à l'objet de la revendication 8.

Le calcul permettra, en utilisant les critères habituels, par exemple ceux exposés par Viktorov dans "Rayleigh and Lamb waves", de déterminer approximativement les plages de fréquences correspondant à la propagation en modes S (symétrique) et A (anti-symgtrique) pour une épaisseur de gaine, une dimension de ressort et une nature de matériau données. Toutefois, seule l'expérience permettra de déterminer, pour chaque crayon, la fréquence optimale. Cette fréquence pouvant varier de crayon à crayon du fait des tolérances, il suffira d'adopter une plage de fréquences recouvrant les valeurs optimales pour l'ensemble des crayons et d'effectuer, pour chacun d'eux, une moyenne des échos obtenus aux diverses fréquences de la plage.

L'invention sera mieux comprise à la lecture de la description qui suit de modes particuliers de réalisation donnés à titre d'exemples non limitatifs. La description se réfère aux dessins qui l'accompagnent, dans lesquels:

- la Figure 1 est un schéma de principe, en élévation et en coupe partielle, d'un élément d'assemblage combustible du type couramment dénommé "crayon" auquel peut être appliquée l'invention;
- la Figure 2 montre le montage d'un traducteur axial sur le bouchon supérieur d'un élément du genre montré en Figure 1;
- les Figures 3A, 3B, 3C et 3D montrent l'allure des signaux qui apparaissent pour différents états d'un élément de combustible, dans le cas d'ondes en mode $S_0$;
- la Figure 4, similaire aux Figures 3, montre l'allure d'un signal apparaissant en mode $S_0$ en cas de défaut mécanique de la gaine;
- les Figures 5A et 5B montrent schématiquement l'allure de signaux apparaissant lors de l'exploration en modes $A_0$ et $A_1$;
- la Figure 6 fait apparaître les échos obtenus lors de tirs successifs avec balayage de fréquences;
- la Figure 7 est un synoptique de l'électronique qui peut être associée au traducteur;
- la Figure 8 montre schématiquement un mécanisme utilisable pour mettre en place le traducteur du dispositif sur des éléments successifs d'un même assemblage;
- la Figure 9, similaire à la Figure 2, montre des dispositions possibles d'un traducteur radial;
- la Figure 10 montre un mode possible de constitution en plusieurs éléments d'un traducteur radial;
- la Figure 11 est un Synoatique d'un système de gestion de l'ensemble du dispositif.

Avant de décrire l'invention proprement dite, il peut être utile de donner une brève description d'un élément de combustible auquel elle est susceptible de s'appliquer. Cet élément 10, destiné à être assemblé avec des éléments identiques dans un assemblage de combustible pour réacteur à eau naturelle, comporte une gaine 12 qui aura fréquemment une longueur de plusieurs mètres. Cette gaine, généralement en alliage à base de zirconium, est fermée de façon étanche par deux bouchons terminaux 14 et 16 soudés. La gaine 12 contient un empilement de pastilles 18 de combustible nucléaire retenues en appui contre le bouchon inférieur 16 par un ressort 20 situé dans une chambre d'expansion 22. Le bouchon 14 est muni d'un trou 23 permettant de purger l'élément de combustible 10 après assemblage de ses constituants, d'y introduire de l'hèlium sous une pression élevée (typiquement d'environ 30 bars) avant obturation du trou. On donne aux pastilles 18 un diamètre initial légèrement inférieur au diamètre interne de la gaine 12, de façon à autoriser un gonflement des pastilles sous irradiation. En conséquence, un film de gaz subsiste entre la gaine et la majeure partie de la périphérie de chaque pastille 18.

Lorsqu'un tel élément de combustible 10 est irradié dans un réacteur, des défauts peuvent y apparaître, se manifestant notamment par une fissuration de la gaine. Cette fissuration provoque à son tour une perte de pressurisation et, à la suite des cyclages, une entrée d'eau dans la gaine. L'invention permet de détecter ces divers indices de défaut.

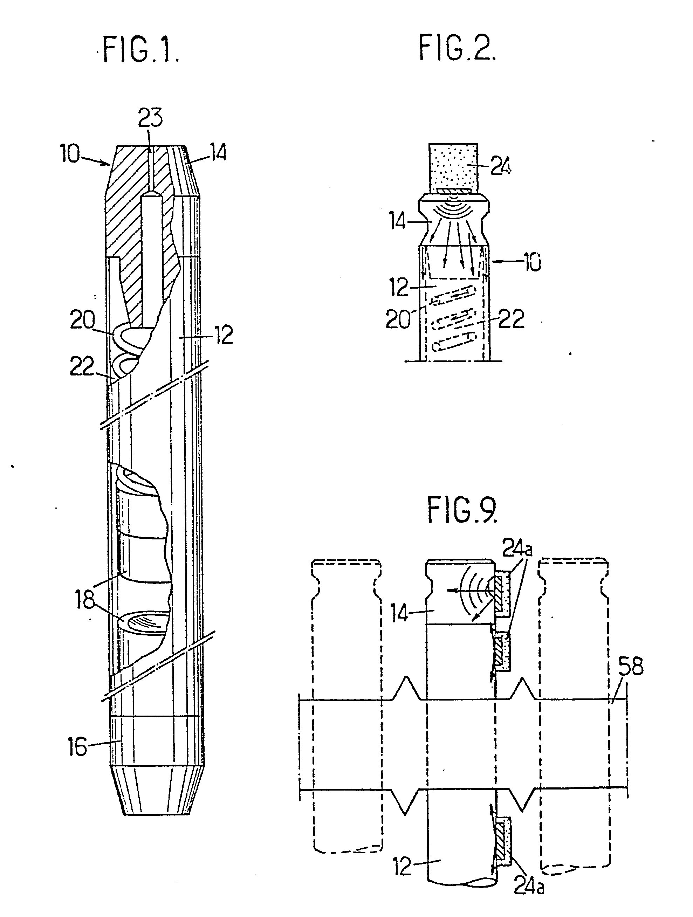

Pour cela, l'invention utilise les phénomènes d'absorption et de réflexion d'ondes ultrasonores appliquées à l'élément 10, se propageant en modes de Lamb. La figure 2 montre schématiquement un traducteur électroacoustique 24 couplé au bouchon 14 et susceptible d'y appliquer des trains d'ondes ultrasonores de fréquence et de durée choisies pour que la propagation s'effectue en mode de Lamb. Comme on le verra plus loin, le traducteur peut être placé radialement.

Avant de décrire les circuits qui doivent lui être associés, il convient de définir le mode de détection des divers indices de défaut.

**Détection de la présence d'eau dans la gaine:**

La détection s'effectue en appliquant, au bouchon 14 dans le cas de la Figure 2, à l'aide du traducteur 24, des trains d'ondes de fréquence et de durée correspondant à un mode d'ondes de Lamb $S_0$ et en mesurant l'amplitude des échos provoqués par la réflexion sur le bouchon inférieur 16. Le traducteur 24 doit évidemment être d'un type admettant une large gamme de fréquences de fonctionnement et il est excité à des fréquences successives régulièrement réparties, dans une première plage de fréquences $f_1$ choisie pour correspondre à une zone d'absorption particulièrement marquée par l'eau éventuellement présente dans les gaines. Cette plage de fréquence $f_1$ devant correspondre à une propagation en mode de Lamb, sa limite supérieure ne doit pas dépasser une valeur qui correspond à une longueur d'onde du même ordre que l'épaisseur de paroi. Dans la pratique, la détection de présence d'eau s'effectuera pour une plage de fréquences notablement inférieure.

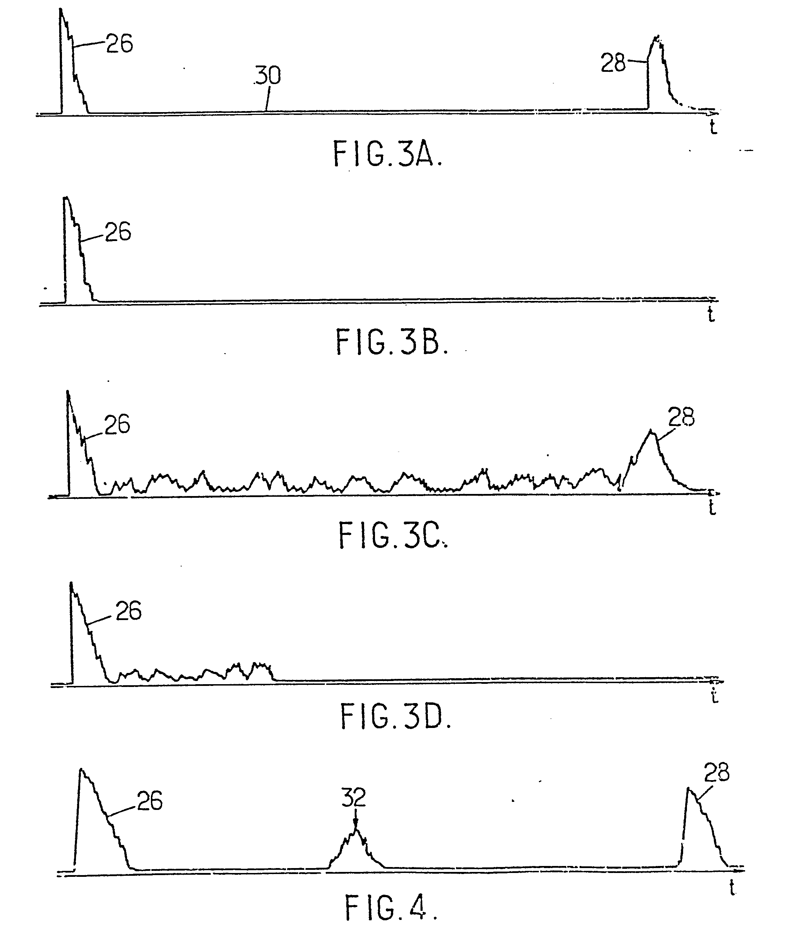

Dans le cas d'un élément de combustible sain, ne contenant pas d'eau, dont les pastilles n'ont qu'une faible étendue de contact avec la gaine, le signal fourni par le traducteur 24 présente l'allure montrée en figure 3A, comportant un pic d'émission 26 et un pic de réception 28 élevé, provoqué par l'écho sur le bouchon inférieur 16. L'absorption par la gaine 12 est faible. Sur une courbe obtenue en faisant la moyenne des valeurs au cours de plusieurs tirs successifs dans la plage de fréquences $f_1$, elle se traduit par un bruit de fond faible qui apparait en 30.

Si au contraire l'élément 10 est défectueux et contient de l'eau, l'écho 28 disparaît, partiellement ou totalement (Figure 3B) du fait de l'atténuation de l'onde liée à la présence simultanée de l'eau et des pastilles 18.

Dans la pratique, cette atténuation sera suffisamment importante sur un élément de combustible représentatif, de plusieurs mètres de long, pour qu'il y ait disparition complète de l'écho 28.

Sur un élément sain, mais après irradiation ayant provoqué un gonflement des pastilles tel qu'elles prennent appui sur la gaine, il y a apparition d'un bruit de fond relativement important, du genre indiqué sur la Figure 3C. On peut attribuer cette modification à la présence de points de contact nombreux et de petits agglomérats résultant des produits de fission solides. Mais ce bruit de fond ne gêne nullement la détection de la présence d'eau, qui se traduit non seulement par la suppression de l'écho 28 sur le bouchon inférieur 16, mais aussi par l'atténuation des échos provenant des contacts entre pastilles et gaine dans la zone humide du crayon (Figure 3D).

**Détection des défauts mécaniques de la gaine:**

La détection des défauts mécaniques de la gaine s'effectue par mesure des échos provoqués par ces défauts. Ce processus est celui couramment utilisé en contrôle non destructif par ultrasons, l'intervalle de temps entre émission et réception indiquant l'emplacement du défaut. Cette détection s'effectuera dans une plage de fréquences $f_2$ choisie de façon à correspondre au mode de propagation $S_0$ et à une absorption réduite par l'eau éventuellement présente dans la gaine. Cette plage $f_2$ sera en général choisie à la limite supérieure correspondant à une propagation en ondes de Lamb. Alors que dans le cas d'un crayon sain, on aura l'allure de courbe de réponse montrée en Figure 3A, un crayon présentant une fissure ou un trou débouchant donnera lieu à un écho intermédiaire 32 (Figure 4).

**Détection de la perte de pression**

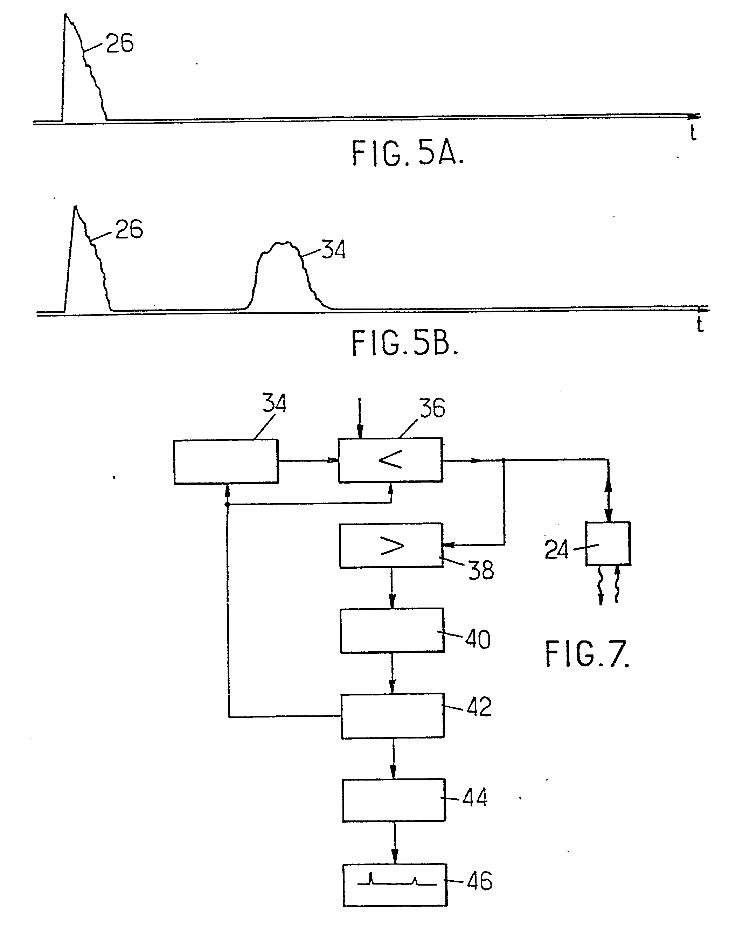

Pour détecter les défauts d'étanchéité de la gaine, qui se traduisent par une perte de la pression interne, on excite le traducteur 24 par un train d'ondes sinusoidales de longue durée, à des fréquences successives choisies dans une plage $f_3$ telle que les ultrasons se propagent dans le ressort 20 (Figure 1) suivant les modes d'ondes de Lamb $A_0$ et/ou $A_1$. Ces modes ont la particularité de présenter une atténuation très sensible à l'environnement du milieu dans lequel ils se propagent, c'est-à-dire à l'atmosphère dans laquelle baigne le ressort 20. Lorsque l'intérieur de la gaine est à la pression normale de 30 bars, il y a atténuation totale des modes $A_0$ et $A_1$, de sorte que le signal a l'allure montrée en Figure 5A. Lorsqu'au contraire le gaz contenu dans la chambre d'expansion s'est échappé et que la pression est retombée à une valeur proche de la pression atmosphérique, l'enregistrement fait apparaître un écho 34 important sur l'extrémité du ressort (Figure 5B).

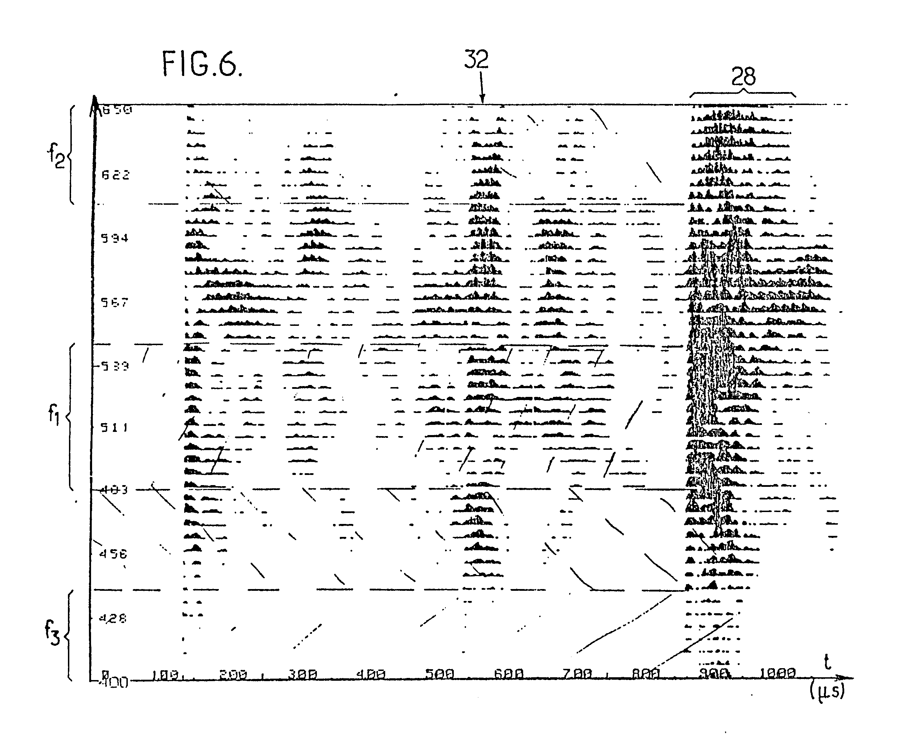

L'exploration sera avantageusement effectuée par tirs successifs en balayant le spectre de fréquence, ce qui donne naissance à une série d'échos tels que ceux montrés schématiquement en Figure 6.

Cette Figure 6 montre les enregistrements d'écho correspondant à des tirs successifs à des fréquences séparées de 5,55 kHz, de 400 à 650 kHz. Dans une première plage de fréquences $f_3$, le traducteur est excité de façon à injecter des ultrasons en modes $A_0$ et $A_1$ dans le ressort. L'absence d'écho à une distance correspondant à l'extrémité du ressort montre qu'une pressurisation subsiste. Dans la plage $f_1$, allant de 403 à 550 kHz environ, on constate un bruit de fond notable, révélateur d'un gonflement des pastilles, et la présence d'échos 28 sur les diverses surfaces du bouchon terminal inférieur, indiquant l'absence d'eau. Enfin, dans la plage de fréquences $f_2$, on voit apparaître en 32 la présence d'un écho révélateur d'un défaut mécanique. Cet écho apparaissait déjà dans la plage de fréquences $f_1$, mais noyé dans un bruit de fond important qui a presque complètement disparu dans la plage $f_2$.

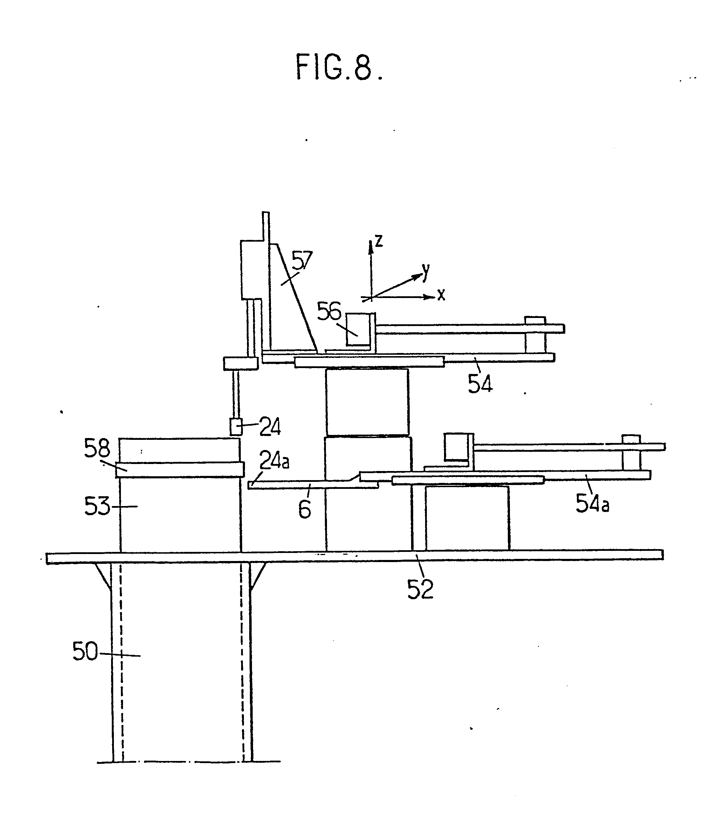

L'électronique associé au traducteur 24 peut avoir la constitution montrée en Figure 7 et comporter un générateur d'ondes sinusoidales 34 à fréquence variable et commandée. Ce générateur attaque un amplificateur 36 d'émission qui permet de fournir un train d'ondes représentant une durée ou un nombre de longueurs d'ondes déterminé. La sortie de cet amplificateur d'émission 36 est reliée au traducteur 24. Les ondes réfléchies reçues par le traducteur sont envoyées, directement ou par l'intermédiaire d'un séparateur, à un amplificateur de réception 38. Les signaux d'écho reçus par l'amplificateur 38 sont soumis à un traitement numérique. Pour cela, la sortie de l'amplificateur 38 est appliquée à un échantillonneur 40 dont les échantillons de sortie sont fournis à une mémoire 42 de stockage. A l'issue d'un échantillonnage sur la durée correspondant à un aller-retour de l'onde ultrasonore du traducteur 24 au bouchon terminal, la mémoire de stockage fournit au générateur 34 un circuit d'incrémentation de fréquence et, à l'amplificateur 36, un signal de déblocage provoquant l'envoi d'un nouveau train. Un circuit de calcul 44 associé à la mémoire 42 permet d'effectuer la moyenne des échos pour l'ensemble des tirs et de l'afficher sur un système de visualisation 46. Le balayage en fréquence sur toute une plage, associé à un calcul de moyenne qui peut être réalisé par un microprocesseur, permet de s'affranchir des variations entre éléments de combustible, dues aux tolérances de fabrication notamment (anisotropie du matériau, variation sur les soudures, etc.).

La mise en place de la sonde sur chaque crayon à son tour est effectuée par un mécanisme commandé à distance qui peut avoir la constitution montrée schématiquement en Figure 8 lorsque le traducteur 24 est prévu pour être placé axialement sur le bouchon. Le mécanisme comprend une console 52 solidaire d'un puits 50 de réception de l'assemblage de combustible 53 comportant les éléments à vérifier. Le mécanisme comprend une table 54 à déplacements croisés en $x$ et $y$, seul le moteur 56 de déplacement en $x$ étant représenté. Cette table porte une potence 57 munie à son tour de moyens de déplacement du traducteur 24 en $z$, c'est-à-dire parallèlement à la direction des éléments. La course verticale de ces derniers moyens est suffisante pour permettre d'introduire le traducteur entre les tubes-guides qui dépassent des éléments de combustible une fois que la pièce d'extrémité supérieure de l'assemblage 53 a été enlevée.

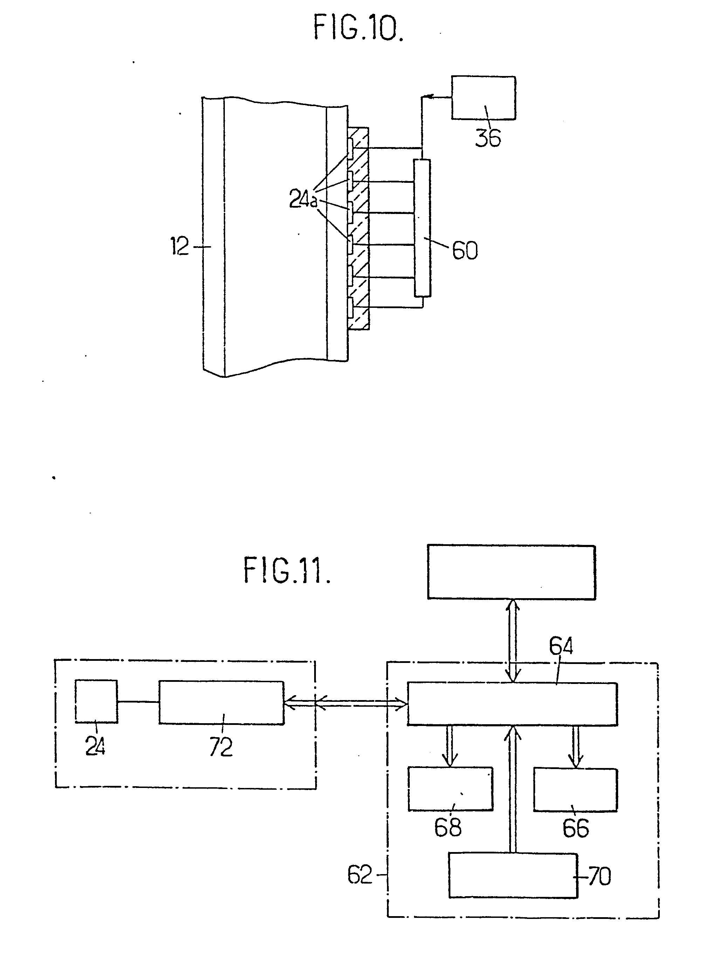

Au lieu d'utiliser un traducteur 24 disposé axialement sur le bouchon de l'élément, on peut utiliser un traducteur radial 24a (Figure 9). Le traducteur, prévu pour émettre un faisceau d'ultrasons perpendiculairement à une génératrice de la gaine 12, peut être placé à différentes hauteurs. Sur un assemblage classique de réacteur à eau sous pression, comportant une grille entretoise supérieure 58, il peut être placé à hauteur du bouchon supérieur 14, immédiatement au-dessus de la grille 58 ou immédiatement au-dessous, de façon à rester dans tous les cas au niveau de la chambre 22.

Dans ce cas, la position la plus avantageuse est généralement juste au-dessous de la grille entretoise 58, ce qui permet de s'affranchir des variations d'emplacement dues à l'irradiation. Dans une variante de réalisation du traducteur radial 24a, ce dernier est constitué de plusieurs éléments reliés à un même amplificateur 36 par l'intermédiaire de prises successives d'une ligne à retard 60, les prises correspondant à des retards égaux au temps de propagation d'une sonde à la suivante. L'onde engendrée dans la gaine 12 est constituée par la résultante des ondes émises par chacun des éléments constitutifs du traducteur et elle est analogue à celle qu'engendrerait un front d'onde oblique arrivant sur la gaine (Figure 10).

Le mécanisme de mise en place d'un traducteur radial 24a peut être très similaire à celui pour la mise en place d'un traducteur axial, mais il n'est pas nécessaire de prévoir le mouvement en $z$. La Figure 8 montre également un tel mécanisme simplifié, comportant encore une table à mouvement croisé 54a dont le niveau est ajusté de façon que le traducteur 24a passe juste au-dessous de la grille supérieure 58. Un tel traducteur est applicable à tous les assemblages dont les crayons sont munis d'au moins une chambre d'expansion 22.

Quel que soit le mécanisme utilisé, il est avantageusement associé à un système informatique qui assure également la gestion de l'électronique de la Figure 7. Cette informatique 62 peut avoir la constitution de principe montrée en Figure 11 et se composer d'un système multi-tâches 64 associé à une mémoire 66 de stockage d'informations, à un terminal de sortie des informations par tout-ou-rien 68 et à un clavier de commande 70. Le système multi-tâches est couplé par un bus à l'électronique 72 dont le détail est montré en Figure 7, qui attaque le traducteur 24.

Le système multi-tâches 64 est également prévu pour gérer le mécanisme et, en particulier, effectuer automatiquement la mise en place du traducteur 24 sur chaque élément à son tour. Dans le cas d'un traducteur axial, le processus de mise en place peut être le suivant: la sonde étant en position haute et amenée approximativement au droit d'un élément 10 à vérifier, on relève les échos réfléchis sur le bouchon 14 d'abord au cours d'un balayage en $x$, puis au cours d'un balayage en $y$. L'amplitude de l'écho réfléchi par le bouchon passe par un maximum suivant chacune des directions et la coïncidence des deux maxima indique l'emplacement exact de l'axe du crayon. Une fois cet emplacement déterminé, le système 64 commande le déplacement en $z$ jusqu'à provoquer l'appui.

On voit que cette mise en place s'effectue en temps réel sans nécessiter d'enregistrement ou d'analyse différé ou de repositionnement. Elle permet de compenser les défauts de positionnement des crayons par rapport à leur position théorique et les déformations dues à l'irradiation.

## Revendications

1. Procédé de détection d'éléments de combustible nucléaire défectueux situés dans un assemblage plongé dans un liquide, utilisant l'absorption ultrasonore, suivant lequel on envoie dans la gaine de chaque élément à vérifier, à partir d'une partie terminale de l'élément, des ondes ultrasonores, caractérisé en ce qu'on envoie les ondes sous forme d'un train à une fréquence et de durée choisies pour que la propagation s'effectue en ondes de Lamb et on détecte les échos; et on répète l'envoi et la détection à des fréquences d'émission différentes, situées dans des plages de fréquences dont une correspond à une absorption notable par l'eau éventuellement contenue dans la gaine et une autre à une formation importante d'écho sur défaut mécanique de la gaine.

2. Procédé selon la revendication 1, caractérisé en ce qu'une des plages de fréquences ($f_1$) est choisie pour correspondre à un maximum d'absorption en cas de présence d'un film d'eau entre les pastilles et la gaine et une seconde plage ($f_2$) pour correspondre à la détection des défauts mécaniques de la gaine.

3. Procédé de détection d'éléments de combustible nucléaire défectueux plongés dans un liquide, caractérisé en ce qu'on répète l'envoi et la détection sur chaque crayon, à des fréquences d'émission différentes dont certaines correspondent à une plage de maximum d'absorption en cas de présence d'un film d'eau entre les pastilles et la gaine et d'autres correspondent à une plage de détection des défauts mécaniques de la gaine.

4. Procédé selon la revendication 1, 2 ou 3, de détection d'éléments défectueux du type comportant un ressort (20) placé dans une chambre d'expansion entre un bouchon terminal (14) et le combustible, caractérisé en ce qu'on applique au ressort un train d'ultrasons de fréquence et de durée telles que la propagation s'effectue en ondes de Lamb en modes $A_0$ et/ou $A_1$, et en ce qu'on mesure les échos sur l'extrémité du ressort.

5. Procédé selon la revendication 4, caractérisé en ce qu'on choisit une première plage de fréquences correspondant à une longueur d'onde au moins égale à l'épaisseur de la gaine de l'élément, une seconde plage de fréquences supérieure à la première et correspondant à la limite supérieure de propagation en ondes de Lamb.

6. Procédé selon l'une quelconque des revendications 1 à 5, caractérisé en ce qu on répète l'enoi et la détection à des fréquences successives différentes réparties dans l'ensemble des plages.

7. Procédé selon l'une quelconque des revendications précédentes, caractérisé en ce qu'on fait une moyenne des réponses pour plusieurs fréquences différentes dans chaque plage.

8. Dispositif de détection d'éléments de combustible défectueux dans un assemblage (53) de combustible nucléaire plongé dans un liquide, chacun des éléments (10) comportant une gaine (12) étanche et contenant un empilement de pastilles de combustible baignant dans une atmosphère de gaz sous pression, ce dispositif comportant un traducteur (24) électroacoustique pouvant appliquer des trains d'ondes ultrasonores à partir d'une partie terminale de l'élément à travers la gaine et un générateur permettant d'exciter le traducteur, le dit dispositif étant caractérisé en ce que le traducteur électroacoustique (24) fonctionne en mode de Lamb, le générateur excitant le traducteur par des trains d'ondes de durée et de fréquences différentes dans des plages correspondant à une propagation en mode de Lamb et, pour l'une des plages, correspondant à une absorption notable en cas de présence de liquide dans la gaine, et en ce qu'il comprend des circuits de réception et de traitement des échos.

9. Dispositif selon la revendication 8, caractérisé en ce qu'il comporte un mécanisme permettant de placer le traducteur (24) sur la tête de chaque élément combustible (10).

10. Dispositif selon la revendication 8, caractérisé en ce qu'il comporte un mécanisme permettant de placer le traducteur, de type radial, sur une génératrice de l'élément à hauteur d'une chambre d'expansion.

## Patentansprüche

1. Verfahren zum Auffinden defekter Kernbrennstoffelemente in einer Brennelementkassette, die in eine Flüssigkeit eingetaucht ist, wobei die Ultraschallabsorption verwendet wird, indem in die Hülle eines jeden zu überprüfenden Elements ausgehend von einem Endteil des Elements Ultraschallwellen geschickt werden, dadurch gekennzeichnet , daß die Wellen in Form eines Wellenzuges mit einer derart ausgewählten Frequenz und Dauer emittiert werden, daß die Wellenfortpflanzung in Form von Lamb-Wellen erfolgt und die Echos erfaßt werden und das Emittieren und Erfassen bei verschiedenen Emissionsfrequenzen wiederholt wird, wobei die Frequenzen in Frequenzbereichen liegen, von denen eine einer erfaßbaren Absorption von Wasser entspricht, das gegebenenfalls in der Hülle enthalten ist und von denen eine andere Frequenz der Bildung eines Echos infolge eines mechanischen Defektes der Hülle entspricht.

2. Verfahren nach Anspruch 1, dadurch gekennzeichnet , daß einer der Frequenzbereiche ($f_1$) so gewählt ist, daß er der maximalen Absorption im Falle des Vorhandenseins eines Wasserfilms zwischen den Brennstofftabletten und der Hülle entspricht und ein zweiter Bereich ($f_2$) so gewählt ist, daß er der Erfassung mechanischer Defekte der Hülle entspricht.

3. Verfahren zum Auffinden von defekten Kernbrennstoffelementen, die in eine Flüssigkeit eingetaucht sind, dadurch gekennzeichnet, daß das Emittieren und Erfassen für jeden Brennstab bei verschiedenen Emissionsfrequenzen wiederholt wird, wobei verschiedene Frequenzen einem Bereich maximaler Absorption im Falle des Vorhandenseins eines Wasserfilms zwischen den Brennstofftabletten und der Hülle entspricht und die anderen Frequenzen einem Bereich zur Erfassung von mechanischen Fehlern der Hülle entsprechen.

4. Verfahren nach Anspruch 1, 2 oder 3 zum Auffinden von defekten Kernbrennstoffelementen, die eine Feder (20) aufweisen, die in einer Expansionskammer zwischen einem Endverschluß (14) und dem Brennstoff angeordnet ist, dadurch gekennzeichnet, daß an die Feder ein Ultraschallwellenzug angelegt wird, der eine solche Frequenz und eine solche Länge hat, daß die Wellenfortpflanzung als Lamb-Wellen mit den Moden $A_0$ und/oder $A_1$ erfolgt und dadurch, daß die Echos am Ende der Feder gemessen werden.

5. Verfahren nach Anspruch 4, dadurch gekennzeichnet, daß ein erster Frequenzbereich ausgewählt wird, der einer Wellenlänge entspricht, die größer oder gleich der Dicke der Schutzhülle des Elements ist und ein zweiter Frequenzbereich, der höher als der erste liegt und dem oberen Bereich der Wellenfortpflanzung der Lamb-Wellen entspricht.

6. Verfahren nach einem der Ansprüche 1 bis 5, dadurch gekennzeichnet, daß das Emittieren und die Detektion der aufeinanderfolgenden verschiedenen Frequenzen, die in der Gesamtheit der Frequenzbereiche verteilt sind, wiederholt erfolgt.

7. Verfahren nach einem der vorstehenden Ansprüche, dadurch gekennzeichnet, daß in jedem Frequenzbereich ein Mittel der Anworten auf mehrere verschiedene Frequenzen gebildet wird.

8. Vorrichtung zum Auffinden von defekten Kernbrennelementen in einer Brennelementkassette (53), die in eine Flüssigkeit eingetaucht ist, wobei jedes der Elemente (10) eine dichte Schutzhülle (12) aufweist, die einen Stapel Brennstofftabletten enthält, die in eine Druckgasatmosphäre eingetaucht sind, wobei die Vorrichtung einen elektroakustischen Wandler (24) aufweist, der Ultraschallwellenzüge aus den von einem Endbereich des Brennelements durch die Schutzhülle anlegen kann und ein Generator zum Erregen des Wandlers, dadurch gekennzeichnet, daß der elektroakustische Wandler (24) in der Lambmode arbeitet und der Generator den Wandler durch Wellenzüge anregt, die verschiedene Dauer und Frequenzen haben, in Bereichen, die einer Wellenfortpflanzung in der Lambmode entsprechen und einer der Bereiche einer spürbaren Absorption im Falle des Vorhandenseins von Flüssigkeit in der Schutzhülle entspricht, und durch Repetierschaltungen und Schaltungen zum Behandeln der Echos.

9. Vorrichtung nach Anspruch 8, gekennzeichnet durch einen Mechanismus, der es ermöglicht, den Wandler (24) auf den Kopf eines jeden Kernbrennstoffelements (10) zu plazieren.

10. Vorrichtung nach Anspruch 8, gekennzeichnet durch einen Mechanismus, der es erlaubt, den radialen Wandler auf einer Erzeugenden eines Kernbrennstoffelements auf der Höhe einer Expansionskammer zu plazieren.

## Claims

1. A method of detecting defective nuclear fuel elements in an assembly immersed in a liquid, using ultrasonic absorption, including sending ultrasonic waves into the sheath of each element to be checked from an end portion of the element, characterized in that the waves are transmitted as a train having a frequency and duration so selected that propagation takes place as Lamb waves and the echoes are detected; and transmission and detection are repeated at different transmission frequencies, situated in frequency ranges one of which corresponds to substantial absorption by water possibly contained in the sheath and an other of which corresponds to occurence of an important echo on a mechanical fault in the sheath.

2. A method according to claim 1, characterized in that one of the frequency ranges (f1) is selected to correspond to maximum absorption if there is a film of water between the pellets and the sheath and a second range (f2) to correspond to detection of mechanical faults in the gain.

3. A method of detecting defective nuclear fuel elements immersed in a liquid, characterized in that transmission and reception on each element are repeated aat different transmission frequencies some of which correspond to a range of maximum absorption if there is a film of water between the pellets and the sheath and others correspond to a range of detection of the mechanical faults in the sheath.

4. A method according to claim 1, 2 or 3, for detecting defective elements of the type having a spring (20) located in a plenum chamber between an end plug (14) and the fuel, characterized in that a train of ultrasounds are applied to the spring having a frequency and a duration such that propagation occurs as Lamb waves in the $A_0$ and/or $A_1$ modes and the echoes at the end of the spring are measured.

5. A method according to claim 4, characterized in that selection is made of a first frequency range corresponding to a wavelength at least equal to the thickness of the element sheath, a second frequency range higher than the first and corresponding to the upper limit for propagation as Lamb waves.

6. A method according to any one of claims 1-5, characterized in that transmission and detection are repeated at successive different frequencies distributed over the whole of the ranges.

7. A method according to any one of the preceding claims, characterized in that an average value of the responses for a plurality of different frequencies in each range is computed.

8. A device for detecting defective fuel elements in a nuclear fuel assembly (53) immersed in a liquid, each of the elements (10) comprising a gas tight sheath (12) containing a stack of fuel pellets in an atmosphere of pressurized gas, said device comprising an electro-acoustic transducer (24) for applying ultrasound wave trains from an end portion of the element through the sheath and a generator for energizing the transducer, said device being characterized in that the electro-acoustic transducer (24) operates in Lamb mode, the generator energizing the transducer with wave trains of different duration and frequencies in ranges corresponding to propagation in Lamb mode and, for one of the ranges, corresponding to substantial absorption if there is liquid within the sheath and in that it comprises circuits for reception and processing echoes.

9. A device according to claim 8, characterized in that it comprises a mechanism for placing the transducer (24) on the head of each fuel element (10).

10. A device according to claim 8, characterized in that it comprises a mechanism for placing the transducer, of radial type, on a generatrix of the element at a longitudinal position where it confronts a plenum chamber.

# FIG.1.

# FIG.2.

# FIG.9.

FIG.3A.

FIG.3B.

FIG.3C.

FIG.3D.

FIG.4.

FIG.5A.

FIG.5B.

FIG.7.

FIG.6.

# FIG.8.

# FIG.10.

# FIG.11.